# EUROPÄISCHE PATENTSCHRIFT

(11) **EP 0 471 961 B1**
(45) Veröffentlichungstag und Bekanntmachung des Hinweises auf die Patenterteilung: **02.03.1994**
(21) Anmeldenummer: 91111170.6
(22) Anmeldetag: 05.07.1991
(51) Int. Cl.: A01D 57/02, A01D 41/14

(54) **Erntevorsatz für einen Mähdrescher**
Header for a combine harvester
Tablier pour moissonneuse-batteuse

(30) Priorität: 01.08.1990 DE 9011277 U
(43) Veröffentlichungstag der Anmeldung: 26.02.1992
(73) Patentinhaber: CLAAS OHG, D-33426 Harsewinkel (DE)
(72) Erfinder: Heidjann, Franz, Dipl.-Ing., W-4834 Harsewinkel (DE); Ligeti, Gabor, Dipl.-Ing., W-4834 Harsewinkel (DE)
(74) Vertreter: Patentanwälte Eisele, Otten & Roth

(56) Entgegenhaltungen:
- EP-A- 0 326 836
- BE-A- 540 375
- DE-A- 1 582 370
- FR-A- 1 210 215
- US-A- 3 628 317
- US-A- 3 638 408
- SOVIET PATENTS ABSTRACTS Section PQ, Week 8644, DerwentPublications Ltd., London, GB; Class P12, AN 86-290 & SU-A-1 217 296 (KUBAN AGRIC INST) 15. März 1986

## Beschreibung

Die Erfindung betrifft einen Erntevorsatz für einen Mähdrescher mit einem Schneidwerkstrog und einer Bandhaspel nach dem Ober begriff des Anspruch 1. Ein derartiger Erntevorsatz ist bereits aus US-A-3638408 bekannt.

Aus der US-A- 3 628 317 ist darüberhinaus ein Erntevorsatz bekannt. Dabei ist der Steuermechanismus für die Zinkenhebel bzw. Zinkenwellen in der Weise ausgebildet, daß an den Zinkenhebeln je eine Rolle gelagert ist und diese Steuerrollen in einer am Lagergerüst der Haspel angeordneten, in sich starren Kurvenbahn umlaufen. Im Einzugsbereich der Querförderschnecke des Schneidwerkstroges, wo die horizontal einlaufende Tragkette nach oben umgelenkt wird, macht die Kurvenbahn einen Knick mit verhältnismäßig kleinem Radius, um die zunächst nach unten geneigten Zinken ohne große Neigungsänderung nach oben aus dem Fördergut herauszuziehen.

Die plötzliche Umlenkung der Kurvenbahn an der genannten Stelle führt jedoch zu hohem Verschleiß und nicht selten zu einem Verklemmen der Steuerrollen. Ein weiterer Nachtel der bekannten Bandhaspel wird darin gesehen, daß sie sich zwar auf und ab schwenken läßt, die Bewegungsbahn der Zinken aber festliegt, so daß eine Anpassung an unterschiedliche Arbeitsbedingungen kaum möglich ist. Schließlich baut die bekannte Bandhaspel verhältnismäßig hoch, so daß bei einem Erntevorsatz mit einem geteilten Schneidwerkstrog, dessen beide Hälften zum Straßentransport um eine in Fahrtrichtung liegende Achse übereinandergeklappt werden, Schwierigkeiten entstehen bzw. die Sicht des Fahrers behindert ist.

Der Erfindung liegt die Aufgabe zugrunde, einen Erntevorsatz zu schaffen, dessen Haspel über eine einfache und zuverlässige Steuerung der Zinken verfügt, sich den unterschiedlichen Arbeitsbedingungen bei stehendem und lagerndem Getreide gut anpassen läßt und die Möglichkeit einer flachen Bauweise bietet.

Erfindungsgemäß wird dies dadurch erreicht, daß den Tragketten eine gleich lange und mit gleicher Umlaufgeschwindigkeit angetriebene, jedoch auf einer anderen Umlaufbahn geführte Steuerkette zugeordnet ist und daß an dieser Gleitstücke gelagert sind, die mit den Zinkenhebeln längsverschiebbar zusammengefügt sind. An den Tragketten ist eine Anzahl in Abständen voneinander angeordneter Kettenglieder so gestaltet, daß sie die jeweilige Zinkenwelle aufnehmen. Weil die Steuerkette nicht parallel zur Tragkette läuft, ist der Abstand zwischen beiden Ketten nicht immer konstant. Zum Ausgleich der notwendigen Abstandsänderung ist an der Steuerkette ein Gleitstück angeordnet, welches den Zinkenhebel aufnimmt und führt und dadurch den Abstand ausgleicht.

Es gibt somit keine plötzliche Umlenkung der Zinken, vielmehr läuft die Steuerbewegung sanft und mit dementsprechend geringerem Verschleiß ab. Je nach Anordnung oder Verstellung der Kettenradlager kann die Zinkenlaufbahn verändert, insbesondere sehr flach gehalten werden.

Die Steuerkette und die in ihrer unmittelbaren Nähe angeordnete Tragkette laufen einmal über ein Doppelkettenrad und an der vorderen bzw. hinteren Umlenkungsstelle der Haspel über Einzelkettenräder, die achsparallel gegeneinander versetzt sind.

Dieser achsparallele Versatz der Trag- bzw. Steuerkettenräder bewirkt die Neigungssteuerung der Zinken innerhalb der Haspel. Damit wird erreicht, daß sich die Zinken auf der ganzen Umlaufbahn, insbesondere aber im Förderbereich vor und über dem Schneidwerk mit ihrer Spitze nach unten bewegen und somit auch das Erntegut nicht über die Querförderschnecke hinaus mitnehmen.

Eine Höhenverstellung des Haspels bzw. des Lagergerüsts der Kettenräder wird mittels eines Tragarms, welcher an der Seitenwand des Schneidwerkstrogs gelagert ist, erreicht. Damit sich bei einer Höhenverstellung des Tragarms die Horizontallage des Haspels nicht wesentlich ändert, ist der Haspel durch eine zum Tragarm etwa parallel angeordnete Koppelstange geführt.

Ferner wird vorgeschlagen, daß das Lagergerüst der Kettenräder an jeder Seite des Haspels einen etwa in Fahrtrichtung weisenden Balken und eine an diesem gelagerte, einfedernd längenveränderbare Wippe aufweist. Gegeneinander achsversetzte Kettenräder befinden sich am hinteren Ende des Balkens und am oberen Ende der nach vorn schräg aufsteigenden Wippe, während am unteren Ende der Wippe ein Doppelkettenrad mit Teilkettenrädern gleichen Durchmessers angebracht ist. Mit der Verstellung der Wippe durch einen Hydraulikzylinder wird erreicht, daß sich die Neigung der Zinkenlaufbahn beim Eintauchen in das Erntegut und in den entscheidenden Abschnitt vor dem Schneidwerk verändert und damit der Fördervorgang dem Erntegut besser angepaßt werden kann. Eine gute Förderwirkung wird somit auch bei Lagergetreide erreicht und eine Anhebung bis zum Messerbalken ermöglicht. Dadurch lassen sich die Erntegutverluste bedeutend vermindern.

Bei der Verwendung einer Bandhaspel in Erntevorsätzen mit geteilten Schneidwerkströgen ist die Steuerkette jeweils nach außen an die Seitenwände gelegt. In der Mitte dagegen, an der Verbindungsstelle der beiden Schneidwerkströge laufen die Tragketten als Einzelketten und sind nur über die Zinkenwelle mit der Steuerkette verbunden. Beim Absenken des Tragarmes bis in die unterste Stellung und bei einer möglichst flach geneigten Stellung der Wippe ist die Haspel insgesamt niedriger als der Schneidwerkstrog. Dadurch wird die Möglichkeit gegeben, die eine Schneidwerkstroghälfte um 180° auf die andere herumzuklappen, wodurch in dieser Straßentransportstellung eine geringe Höhe und somit eine bessere Sicht des Fahrers auf die Straße zu erreichen ist.

Anhand eines Ausführungsbeispiels soll die Erfindung näher erläutert werden. In den zugehörigen Zeichnungen zeigen:
- Fig. 1: eine schematisierte räumliche Ansicht eines Erntevorsatzes mit geteiltem Schneidwerkstrog schräg von vorn,
- Fig. 2: eine Seitenansicht des Erntevorsatzes nach Fig. 1 mit weiteren Einzelheiten und
- Fig. 3: eine Seitenansicht des Erntevorsatzes in fahrbereiter, zusammengeklappter Stellung und den vorderen Teil des Mähdrescher-Fahrwerks.

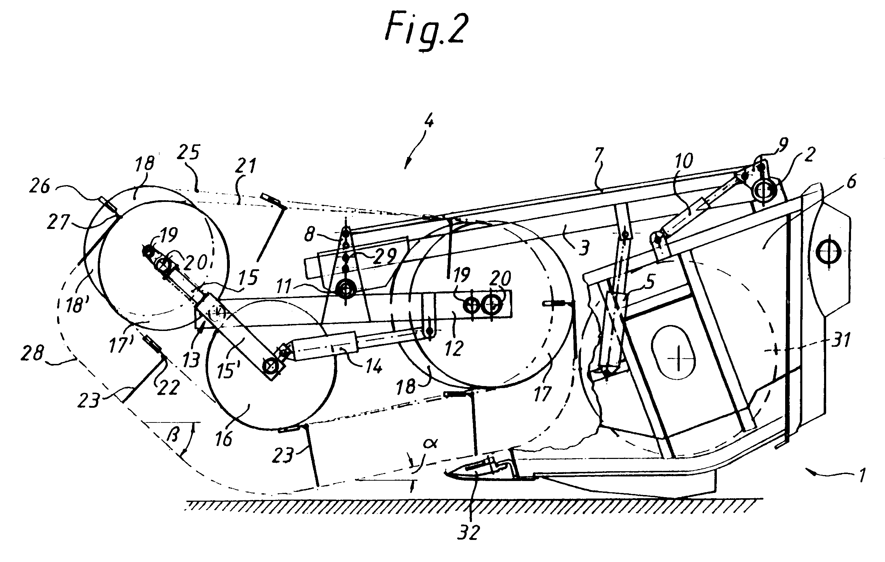

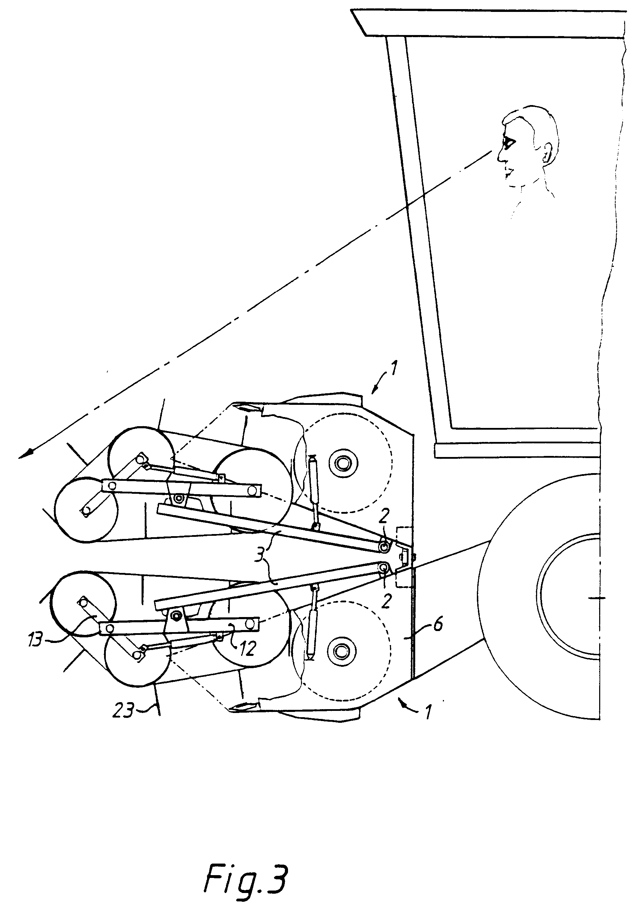

Nach den Figuren 2 und 3 sind an der Rückwand eines geteilten Schneidwerkstrogs 1 in Lagern 2 die Tragarme 3 der Haspeln 4 gelagert und mit Hydraulikzylindern 5 an den Seitenwänden 6 abgestützt. Etwa parallel zu den Tragarmen 3 ist je eine Koppelstange 7 vorgesehen. Sie verbindet einen Dreieckhebel 9, der gleichachsig mit dem Tragarm 3 im Lager 2 gelagert ist mit einem Querarm 8 eines Balkens 12. Dieser bzw. der Querarm 8 ist mittels eines Schwenklagers 11 an einem Lagerauge des Tragarms 3 gelagert. Ein Druckzylinder 10 schwenkt den Dreieckhebel 9 bezüglich der Seitenwand 6, wodurch mittels der Koppelstange 7 der Balken 12 und damit die ganze Haspel eine Schwenkbewegung um das Schwenklager 11 ausführt. Wird der Druckzylinder 10 nicht betätigt, sondern nur der Tragarm 3 mittels des Hydraulikzylinders 5 auf und ab bewegt, so behält der Balken 12 seine Neigungslage im wesentlichen bei.

Durch die Möglichkeit der wahlweisen Veränderung der Anlenkung der Koppelstange 7 an den Querarm 8 ist eine, den unterschiedlichen Verhältnissen anpaßbare Einstellung der Arbeitsebene (Förderebene) der Haspelzinken 23 möglich.

Am vorderen Ende des Balkens 12 befindet sich eine drehbar gelagerte Wippe 13, die mittels eines Zylinders 14 mit dem hinteren Teil des Balkens 12 verbunden ist. Die nach vorn ansteigende Wippe 13 besteht aus zwei Teilen. Der untere Abschnitt 15' ist am Balken 12 gelagert, während der obere Abschnitt 15 im unteren Abschnitt 15' teleskopierbar ist, wobei eine Feder die beiden Abschnitte auseinanderdrückt. Am unteren Abschnitt 15' der Wippe 13 sind auf einer gemeinsamen Achse zwei Kettenräder mit gleichem Durchmesser befestigt, die ein Doppelkettenrad 16 bilden. Am oberen Abschnitt 15 sind dagegen ein Tragkettenrad 17' und ein Steuerkettenrad 18' mit parallelen Achsen 20 bzw. 19 gelagert, die einen Abstand in Wippenlängsrichtung voneinander haben. Am hinteren Teil des Balkens 12 befindet sich ein etwas größeres Tragkettenrad 17, dem ein entsprechendes Steuerkettenrad 18 mit gleichem Achsabstand in Balkenlängsrichtung vorgelagert ist.

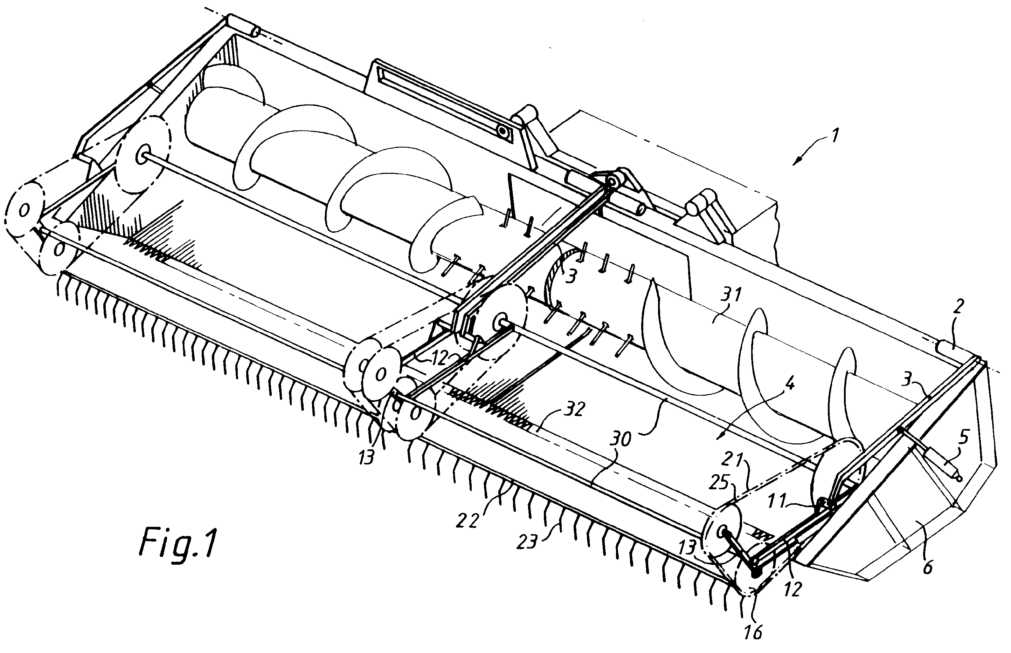

Über die Tragkettenräder 17 und 17' sowie über das eine Kettenrad des Doppelkettenrads 16 verläuft eine Tragkette 21 und über die Steuerkettenräder 18 und 18' sowie das andere Kettenrad des Doppelkettenrads 16 verläuft eine Steuerkette 25. Wie aus der schematischen Darstellung aus Fig. 1 ersichtlich ist an jeder Seite der beiden Haspeln eine Tragkette 21 vorgesehen. Zwischen den beiden Tragketten einer Haspel sind in Umlaufrichtung beabstandet mehrere Zinkenwellen 22 gelagert, an denen Zinken 23 angeordnet sind und mit ihrer jeweiligen Zinkenwelle einen Rechen bilden. Am äußeren Ende jeder Zinkenwelle sitzt ein Zinkenhebel 27, der etwa rechtwinklig zu den Zinken 23 steht. Dieser Zinkenhebel 27 ist von einem Gleitstück 26 längsverschiebbar aufgenommen, das seinerseits an der Steuerkette 25 gelagert ist. Diese längsverschiebbare Verbindung gleicht den wechselnden Abstand zwischen der Steuerkette 25 und der ihr zugeordneten Tragkette 21 aus.

Durch die achsversetzte Lagerung der Tragkettenräder 17, 17' und der Steuerkettenräder 18, 18' werden die Zinken 23 so gesteuert, daß ihre Spitzen einer gestrichelt dargestellten Bewegungsbahn 28 folgen, die, beginnend am frontseitigen Ende des Haspels zunächst um einen Winkel β nach hinten unten geneigt ist und dann nach der Umlenkung am Doppelkettenrad 16 mit dem Neigungswinkel α leicht ansteigt, um dann kurz vor der Querförderschnecke des Schneidwerkstroges nach oben wegzuführen. Diese Neigungen der genannten Abschnitte der Bewegungsbahn 28 bleiben infolge der Koppelstange 7 auch dann im wesentlichen erhalten, wenn der Tragarm 3 mittels des Hydraulikzylinders 5 angehoben wird. Durch mehrfach am Querarm 8 angebrachte Bohrungen 29 läßt sich noch eine feinere Abstimmung der Neigungsunterschiede erreichen. Insbesondere kann die Koppelstange 7 genau parallel zum Tragarm 3 eingestellt werden, so daß sich dann ein exaktes Parallelhebelgestänge ergibt.

Im übrigen kann die ganze Haspel 4 mittels des Druckzylinders 10 in ihrer Neigungslage verstellt werden, was im Hinblick auf die Bewegungsbahn 28 zur Folge hat, daß der eine Abschnitt flacher und der andere steiler wird und umgekehrt. Schließlich kann durch Betätigen des Zylinders 14 die Neigung der Wippe 13 bezüglich des Balkens 12 verstellt werden, was zur Folge hat, daß die beiden betrachteten Bahnabschnitte steiler bzw. beide flacher verlaufen. Somit kann man bei unterschiedlicher Ernteguthöhe den Einzugswinkel der Zinken an der Frontseite verändern, ohne diesen Winkeln in dem Bereich vor dem Schneidwerk ebenfalls ändern zu müssen.

Fig. 1 zeigt noch die gegenseitige Verbindung der beiden Balken 12 einer Haspel durch Hohlprofilschienen 30, die somit die Lagergerüste der Kettenräder beider Seiten zu einer Baueinheit verbinden. Auch Fig. 1 zeigt die Querförderschnecken 31 und die Mähbalken 32 der jeweiligen Schneidwerkströge 1. Fig. 3 macht besonders deutlich, wie flach sich die Haspeln darstellen, wenn die Schneidwerkstroghälften aufeinandergeklappt sind. Der Fahrer des Mähdreschers kann somit den unmittelbar vor dem Erntevorsatz liegenden Straßenabschnitt sehr gut einsehen.
- 1: Schneidwerkstrog
- 2: Lager
- 3: Tragarm
- 4: Haspel
- 5: Hydraulikzylinder
- 6: Seitenwand
- 7: Koppelstange
- 8: Querarm
- 9: Dreieckhebel
- 10: Druckzylinder
- 11: Schwenklager
- 12: Balken
- 13: Wippe
- 14: Zylinder
- 15: oberer Abschnitt
- 15': unterer Abschnitt
- 16: Doppelkettenrad
- 17: Tragkettenrad
- 17': Tragkettenrad
- 18: Steuerkettenrad
- 18': Steuerkettenrad
- 19: Achse
- 20: Achse
- 21: Tragkette
- 22: Zinkenwelle
- 23: Zinken
- 25: Steuerkette
- 26: Gleitstück
- 27: Zinkenhebel
- 28: Bewegungsbahn
- 29: Bohrung
- 30: Hohlprofilschiene
- 31: Querförderschnecke
- 32: Mähbalken

- α: Neigung
- β: Neigung

## Patentansprüche

1. Erntevorsatz für einen Mähdrescher mit einem Schneidwerkstrog (1) und einer Bandhaspel (4), deren Förderorgane an über je drei Kettenräder (16, 17, 17') umlaufenden endlosen Tragketten (21) gelagert sind, wobei den Tragketten (21) wenigstens eine gleich lange, über drei Kettenräder entsprechender Durchmesser laufende und mit gleicher Umlaufgeschwindigkeit angetriebene, jedoch auf einer anderen Umlaufbahn geführte Steuerkette (25) zugeordnet ist, welche zur Steuerung der Winkelstellung der Förderorgane mit diesen verbunden ist, dadurch gekennzeichnet, daß jedem aus einer Tragkette (21) und einer Steuerkette (25) bestehenden Kettenpaar zwei gleichachsige Kettenräder (16) zugeordnet sind, während die übrigen Kettenräder (17, 18, 17', 18') gegeneinander versetzt sind, und daß zur Verbindung mit den als Zinkenwellen (22) ausgebildeten Förderorganen an der Steuerkette (25) Gleitstücke (26) gelagert sind, die mit an den Zinkenwellen (22) befestigten Zinkenhebeln (27) längsverschiebbar zusammengefügt sind.

2. Erntevorsatz nach Anspruch 1, dadurch gekennzeichnet, daß die zwei bezüglich der Fahrtrichtung hinteren Kettenräder (17, 18) etwa in horizontaler Richtung gegeneinander versetzt sind.

3. Erntevorsatz nach einem der vorhergehenden Ansprüche, dadurch gekennzeichnet, daß das Lagergerüst der Kettenräder mittels eines horizontalachsigen Schwenklagers (11) an einem auf und ab schwenkbaren Tragarm (3) gelagert und einstellbar angeordnet ist.

4. Erntevorsatz nach Anspruch 3, dadurch gekennzeichnet, daß das Lagergerüst mittels einer Koppelstange (7) so geführt ist, daß es bei der Schwenkbewegung des Tragarms (3) seine Neigung im wesentlichen beibehält.

5. Erntevorsatz nach Anspruch 1 oder 4, dadurch gekennzeichnet, daß zur Einstellung der Arbeitsebene (Förderebene) der Haspelzinken (23) an unterschiedliche Verhältnisse, eine wahlweise Veränderung der Anlenkung der Koppelstange (7) an den Querarm (8) erfolgt.

6. Erntevorsatz nach Anspruch 2, dadurch gekennzeichnet, daß das Lagergerüst der Kettenräder einen Längsbalken (12) umfaßt, an dessen hinterem Ende sich die in horizontaler Richtung gegeneinander versetzten Kettenräder (17, 18) befinden und an dessen vorderem Ende eine nach vorn ansteigende Wippe (13) gelagert ist, die aus zwei einfedernd teleskopierbaren Abschnitten (15, 15') besteht, und daß am unteren Abschnitt (15') der Wippe (13) ein Doppelkettenrad (16) und am oberen Abschnitt zwei weitere in Wippenlängsrichtung achsparallel versetzte Kettenräder (17', 18') gelagert sind.

7. Erntevorsatz nach einem der vorhergehenden Ansprüche, dadurch gekennzeichnet, daß die Haspel (4) so flach ist, daß sie in ihrer untersten Stellung die Rückwand (2) des Schneidwerktrogs (1) nicht überragt.

## Claims

1. A harvesting attachment for a combine harvester with a cutting tool trough (1) and a belt reel (4), of which the conveyor means are mounted on endless supporting chains (21) revolving around in each case three sprockets (16, 17, 17'), whereby at least one equally long control chain (25) running over three sprockets of corresponding diameter and driven at the same speed of rotation but guided on a different path is associated with the supporting change (21) and is connected to the conveying means in order to control their angular setting, characterised in that two equiaxial sprockets (16) are associated with each pair of chains consisting of a supporting chain (21) and a control chain (25), whereas the other sprockets (17, 18, 17', 18') are offset in respect of one another and in that for connecting with the conveyor means constructed as tined shafts (22) there are on the control chain (25) sliding members (26) which for longitudinal displacement are connected to tined levers fixed on the tined shafts (22).

2. A harvesting attachment according to Claim 1, characterised in that the two sprockets (17, 18) which are at the rear in the direction of travel are in the horizontal direction offset in respect of each other.

3. A harvesting attachment according to one of the preceding Claims, characterised in that the mounting frame of the sprockets is adjustably disposed, being mounted on an upwardly and downwardly pivotable supporting arm (3) by means of a pivot bearing (11) which has a horizontal axis.

4. A harvesting attachment according to Claim 3, characterised in that the mounting frame is so guided by a coupling rod (7) that it substantially retains its angle of inclination during the pivoting movement of the supporting arm (3).

5. A harvesting attachment according to Claim 1 or 4, characterised in that for adjustment of the working plane (conveying plane) of the reel tines (23) to suit different situations, the articulation of the coupling rod (7) on the cross arm (8) can be varied as desired.

6. harvesting attachment according to Claim 2, characterised in that the mounting frame of the sprockets comprises a longitudinal beam (12) at the rear end of which there are sprockets (17, 18) which are offset in respect of one another in the horizontal direction while at its front end there is mounted a forwardly rising rocker (13) which consists of two telescopically inwardly yielding portions (15, 15') and in that on the lower portion (15') of the cradle (13) there is a double sprocket (16) while on the upper portion there are mounted two further sprockets (17', 18') which are axially parallel and offset in the longitudinal direction of the cradle.

7. A harvesting attachment according to one of the preceding Claims, characterised in that the reel (4) is so flat that in its lowest setting it does not project beyond the rear wall (2) of the cutting tool trough (1).

## Revendications

1. Tablier pour une moissonneuse-batteuse, comportant une auge de coupe (1), et un rabatteur à bande (4), dont les organes de transport sont montés sur des chaînes de support sans fin (21) tournant, à chaque fois, sur trois roues à chaîne (16,17,17'), au moins une chaîne de commande (25) de même longueur, tournant sur trois roues à chaîne de diamètre correspondant, et entraînée à la même vitesse de rotation, mais guidée sur une autre trajectoire, étant associée aux chaînes de support (21), chaîne de commande qui, pour commander la position angulaire des organes de transport, est reliée à ceux-ci,
caractérisé en ce que deux roues à chaîne (16) de même axe sont associées à chaque paire de chaînes, constituée d'une chaîne de support (21) et d'une chaîne de commande (25), tandis que les roues à chaîne restantes (17,18,17',18') sont décalées les unes par rapport aux autres, et en ce que, pour la liaison aux organes de transport réalisés sous forme d'arbres à dents (22), des coulisseaux (26) sont montés sur la chaîne de commande (25), lesquels sont réunis, de façon longitudinalement déplaçable, à des leviers à dents (27) fixés aux arbres à dents (22).

2. Tablier selon la revendication 1,
caractérisé en ce que les deux roues à chaîne (17,18), arrière par rapport à la direction d'avance, sont décalées l'une par rapport à l'autre à peu près en direction horizontale.

3. Tablier selon l'une des revendications précédentes,
caractérisé en ce que le cadre de palier des roues à chaîne est monté et est agencé de façon réglable au moyen d'un palier pivotant (11) à axe horizontal sur un bras de support (3) pouvant pivoter vers le haut et vers le bas.

4. Tablier selon la revendication 3,
caractérisé en ce que le cadre de palier est guidé au moyen d'une bielle (7) de sorte que, lors du pivotement du bras de support (3), il conserve, de façon générale, son inclinaison.

5. Tablier selon la revendication 1 ou 4,
caractérisé en ce que, pour régler le plan de travail (plan de transport) des dents (23) du rabatteur à des conditions différentes, une modification à volonté de l'articulation de la bielle (7) au bras transversal (8) est effectuée.

6. Tablier selon la revendication 2,
caractérisé en ce que le cadre de palier des roues à chaîne comporte une barre longitudinale (12), à l'extrémité arrière de laquelle se trouvent les roues à chaîne (17,18) décalées l'une par rapport à l'autre en direction horizontale, et à l'extrémité avant de laquelle est montée une bascule (13) montant vers l'avant, qui est constituée de deux tronçons (15,15') élastiquement télécospiques, et en ce que, sur le tronçon inférieur 15' de la bascule (13), est montée une roue à chaîne double (16) et, sur le tronçon supérieur, sont montées deux autres roues à chaîne (17',18') décalées parallèlement à l'axe en direction longitudinale de la bascule.

7. Tablier selon une des revendications précédentes,
caractérisé en ce que le rabatteur (4) est plat de sorte que, dans sa position la plus basse, il ne dépasse pas la paroi arrière (2) de l'auge de coupe (1).
